# EUROPÄISCHE PATENTSCHRIFT

(11) **EP 4 241 959 B1**
(45) Veröffentlichungstag und Bekanntmachung des Hinweises auf die Patenterteilung: **31.12.2025**
(21) Anmeldenummer: 23153004.9
(22) Anmeldetag: 24.01.2023
(51) Int. Cl.: B29C 45/33, B29C 45/73

(54) **SCHIEBEREINHEIT FÜR EIN FORMWERKZEUG**
SLIDE UNIT FOR A MOULDING TOOL
UNITÉ DE TIROIR POUR UN OUTIL DE MOULAGE

(30) Priorität: 21.02.2022 DE 102022103975
(43) Veröffentlichungstag der Anmeldung: 13.09.2023
(73) Patentinhaber: Meusburger Georg GmbH & Co. KG, 6960 Wolfurt (AT)
(72) Erfinder: Surma, Rainer, 6890 Lustenau (AT); Jussel, Norman, 6837 Weiler (AT)
(74) Vertreter: Riebling, Peter

(56) Entgegenhaltungen:
- EP-A1- 1 498 248
- CN-A- 108 162 327
- DE-A1- 102013 207 002
- DE-B3- 102014 012 416
- KR-A- 20180 018 038
- US-A- 6 093 015
- US-A1- 2005 098 295
- US-A1- 2014 106 022
- US-B1- 8 147 238

## Beschreibung

Die Erfindung betrifft eine Schiebereinheit für ein Formwerkzeug, insbesondere für eine Spritz- und Druckgussform nach den Oberbegriffen der Patentansprüche 1 und 7.

In der Kunststoffverarbeitung wird hauptsächlich ein Spritzgussverfahren eingesetzt. Mit Hilfe einer Spritzgießmaschine wird der Kunststoff verflüssigt und in ein Spritzgießwerkzeug unter Druck eingespritzt. Das Spritzgießwerkzeug besteht meistens aus einer düsenseitigen und einer auswerferseitigen Formplatte. Die Kavität zwischen den beiden Formplatten bestimmt die Form und die Oberflächenstruktur des Kunststoffteils. Nach erfolgter Abkühlung des fertigen Kunststoffteils fahren die beiden Formplatten wieder auseinander und geben das fertige Kunststoffteil frei.

Falls die Kontur eine seitliche Hinterschneidung, wie z.B. eine Bohrung aufweisen soll, werden zusätzliche Schieber eingesetzt. Schieber sind bewegliche Bauteile innerhalb des Spritzgießwerkzeuges, welche bevorzugt an ihrer Stirnseite eine Formkontur aufweisen, die während des Spritzgießverfahrens in dem Kunststoffteil abgebildet wird. Bei einer Bewegung der Formplatte wird gleichzeitig der Schieber bewegt und der Hinterschnitt freigestellt. Entscheidend ist hierbei, dass der Schieber stets einen vorher definierten Weg bewegt wird, denn nur so kann das Kunststoffteil ohne Beschädigung aus dem Spritzgießwerkzeug ausgeworfen werden.

Eine Schiebereinheit für Spritz- und Druckgussformen besteht aus einem Schieber, welcher in einer Schieberführung einer ersten Formplatte verschiebbar angeordnet ist und einem Antriebs- und Schließkeil, welcher in einer zweiten Formplatte angeordnet ist. Bei einer Bewegung der Formplatten greift der Antriebs- und Schließkeil mit seinem Antriebssteg in den Schieber ein und bewegt diesen.

Bei komplexen Formen werden Schiebereinheiten mit kleinen Einbaumaßen benötigt. Die Firma Meusburger Georg GmbH & Co KG, welche Anmelderin des vorliegenden Schutzrechts ist, bietet beispielsweise Kompaktschiebereinheiten mit den Bezeichnungen E3300, E3330, sowie E3360 an, welche hochpräzise sind und eine extrem schlanke Bauform aufweisen. Wesentlicher Vorteil einer Kompaktschiebereinheit ist die gleichzeitige Betätigung und Verriegelung mit nur einem Bauteil.

Mit der DE 10 2018 106 891 A1 von der gleichen Anmelderin wird eine Schiebereinheit für Spritz- und Druckgussformen offenbart. Auf die vorliegende Druckschrift wird vollumfänglich Bezug genommen. Der gesamte Offenbarungsinhalt ist auch Grundlage der vorliegenden Erfindung, so dass die grundsätzliche Funktion der Schiebereinheit aus dieser Druckschrift zu entnehmen ist. Bei der DE 10 2018 106 891 A1 weist der Schieber eine Führungsnut auf, welche sich über die gesamte Höhe des Schiebers erstreckt, wobei der Antriebs- und Schließkeil mindestens einen Führungssteg aufweist, welcher in die Führungsnut eingreift und über den Außenumfang des Schiebers hinaus formschlüssig in eine halboffene, profilierte Ausnehmung der Schieberführung eingreift.

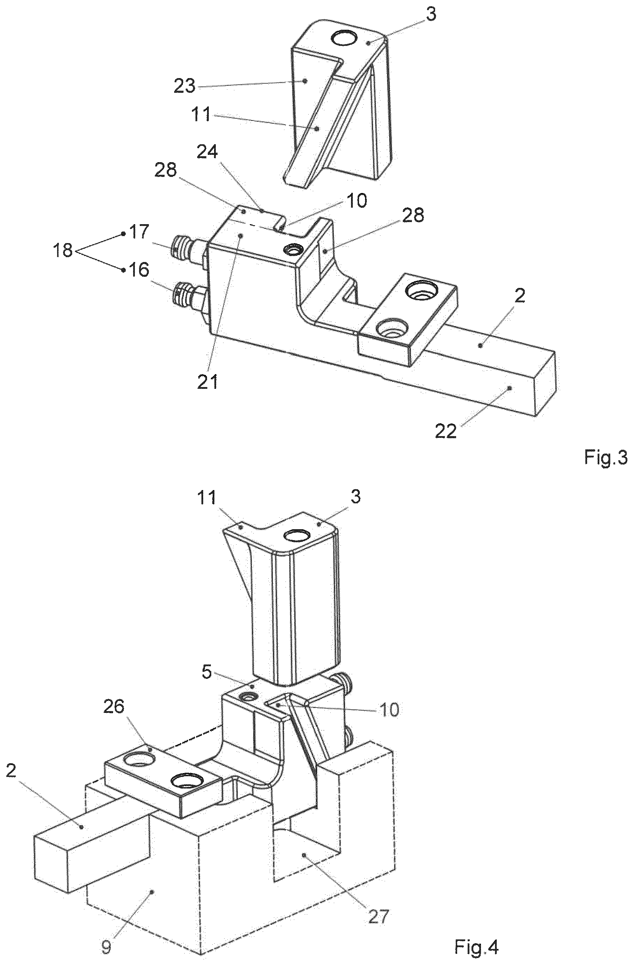

Die EP 0 695 619 A1 offenbart ein Spritzwerkzeug mit einem quer zur Längsachse des Werkzeuges verstellbaren Formschieber, in welchen ein Schrägteil eines Aufspannkörpers eingreift. Die Verriegelung erfolgt zentral in der Mitte des Schiebers, wobei sich das Schrägteil und die hierfür vorgesehene Ausnehmung des Formschiebers (Fig.4) nahezu über die gesamte Breite der beiden Bauteile erstrecken.

Die Kühlung des Werkzeugs, insbesondere des Formeinsatzes spielt bei Spritzgießwerkzeugen eine wichtige Rolle. Durch den Einbau eines Schiebers findet eine Unterbrechung des Formeinsatzes und gleichzeitig eine Unterbrechung einer möglichen Kühlung statt. Vorzugsweise sollte der Schieber eine eigene Kühlvorrichtung aufweisen, um die fehlende Kühlung des Formeneinsatzes auszugleichen. Hierfür weist der Schieber einen eigenen Kühlkreislauf mit einem Kühleingang und einem Kühlausgang auf. Die Anschlüsse für die Kühlung dürfen beim Bewegen des Schiebers nicht im Weg sein. Dies stellt jedoch bei einer Kompaktschiebereinheit ein großes Problem dar, da diese relativ klein ausgebildet ist und dadurch kaum ein Bauraum für eine Kühlvorrichtung vorhanden ist.

Die KR 10 2018 0018038 A offenbart eine Schiebereinheit nach dem Oberbegriff des Anspruchs 1.

Die EP 1 498 248 offenbart eine Schiebereinheit nach dem Oberbegriff des Anspruchs 7.

Die US 2014/106022 A1 und CN 108 162 327 A offenbaren Schiebereinheiten mit Kühlvorrichtungen.

Aufgabe der Erfindung ist es daher eine Kompaktschiebereinheit zu verbessern, insbesondere um den Bauraum der Schiebereinheit besser auszunutzen.

Zur Lösung der gestellten Aufgabe ist die Erfindung durch die technische Lehre der Ansprüche 1 und 7 gekennzeichnet.

Ein Merkmal der Erfindung ist, dass am Schieber ein Schieberkopf mit einem zusätzlichen Führungsabschnitt angeordnet ist und dass in diesem Führungsabschnitt die Führungsnut angeordnet ist, wobei bei einer Bewegung der Formplatten ein Antriebs- und Schließkeil mit mindestens einem Antriebssteg in die Führungsnut des Schiebers eingreift und mit der Führungsnut zusammenwirkt.

Durch den zusätzlichen Führungsabschnitt entsteht ein zusätzlicher Materialbereich für die seitliche, asymmetrische Anordnung der Führungsnut. Der Führungsabschnitt ist entweder einstückig oder lösbar am Schieberkopf angeordnet.

Bei dem Führungsabschnitt handelt es sich um einen zusätzlichen Materialbereich, welcher den Schieberkopf zumindest einseitig erweitert, wobei die Führungsnut sich im Führungsabschnitt befindet. Der Führungsabschnitt stellt somit eine Art Aufdopplung dar. Vorzugsweise befindet sich der Führungsabschnitt außerhalb der eigentlichen Längserstreckung des Schiebers.

Bevorzugt ist der zusätzliche Führungsabschnitt mit der Führungsnut nur auf einer Seite des Schieberkopfes vorgesehen. Durch den zusätzlichen Führungsabschnitt weist der Schieber eine Seitenverschiedenheit (=Asymmetrie) auf. Dies bewirkt, dass die Führungsnut asymmetrisch am Schieberkopf angeordnet ist.

Aufgrund des asymmetrischen, zusätzlichen Führungsabschnitts und der dortigen Anordnung der Führungsnut kann der verbleibende Bauraum des Schiebers und/oder des Schieberkopfes anderweitig genutzt werden. Unter Bauraum wird der gesamte Raum des Schiebers - außer dem Führungsabschnitt - verstanden. Dieser Bauraum steht beispielsweise für den Einbau bestimmter Vorrichtungen zur Verfügung. Eine solche Vorrichtung kann beispielsweise ein Temperatursensor oder ein Drucksensor oder eine Kühlvorrichtung sein oder ein Formkern, der durch Rundschleifen hergestellt wurde und von hinten eingebaut wird. Oder der Bauraum wird lediglich zur Aussteifung des Schiebers genutzt, um höhere Kräfte zu übertragen.

Die Führungsnut befindet sich somit in einem kleinen, extra hierfür vorgesehenen Teilbereich an einer der Seitenflächen des Schiebers. Der restliche Schieber weist einen relativ großen Baukörper auf, wodurch eine hohe Stabilität des Schiebers erreicht wird.

Bisher war es, wenn die Schiebereinheit als Kompaktschiebereinheit ausgebildet ist, aufgrund des geringen Bauraumes nicht möglich eine Kühlvorrichtung einzubauen. Bei der erfindungsgemäßen Ausführungsformen steht durch den zusätzlichen Führungsabschnitt ein ungenutzter Bauraum zur Verfügung. Durch den neu gewonnen Bauraum lässt sich nun erstmals eine Kühlvorrichtung in dem Schieber einer Kompaktschiebereinheit anordnen. Die Kühlvorrichtung, welche zur Kühlung des Schiebers eingesetzt wird, ist somit in dem Bereich außerhalb des Führungsabschnitts angeordnet.

Unter dem Begriff Kühlvorrichtung wird eine Temperier-Vorrichtung verstanden, mit welcher entweder der Schieber gekühlt und/oder geheizt werden kann. Als Kühlmedium wird entweder eine Kühlflüssigkeit (z.B. Wasser oder Öl) oder ein Gas verwendet.

Die Kühlvorrichtung ist beispielsweise als Kühlkreislauf ausgebildet und weist einen Eingang, mindestens einen Kühlkanal und einen Ausgang für das Kühlmedium auf. Das Kühlmedium führt die Wärme durch den Kühlkreislauf aus dem Spritzgießwerkzeug nach außen ab. Der Kühlkreislauf wird an zusätzliche Temperiergeräte, wie z.B. Kühl- oder Heizgeräte angeschlossen, die das Medium auf die gewünschte Temperatur herunterkühlen oder aufheizen. Bei besonders hohen Temperaturen sind teilweise mehrere Kühlkanäle innerhalb der Schiebereinheit notwendig.

Bei einer weiteren bevorzugten Ausführungsform wird statt der Kühlvorrichtung mit den Kühlkanälen mindestens eine Heizpatrone in die Schiebereinheit eingesetzt, welche mittels Stroms aufheizbar ist. Der Anschluss der Heizpatrone erfolgt durch einen Stecker. Zusätzlich können Sensoren die Temperatur überwachen und eine Steuereinheit dementsprechend die Heizpatrone regeln.

Die Führungsnut erstreckt sich vorzugsweise über die gesamte Höhe des Schiebers, so dass sie den Schieber vollständig durchdringt. Aufgrund der durchgängigen Führungsnut ist ein Durchführen bzw. Durchgreifen des Antriebs- und Schließkeils durch den Schieber möglich. Die Führungsnut im Schieber ist bevorzugt eckig ausgebildet. Es sind jedoch auch andere Formen, wie z.B. zylindrische oder dergleichen möglich.

Die Führungsnut weist mindestens eine Führungskontur auf, welche als geneigte Fläche ausgebildet ist und eine Kulissenführung für den Antriebs- und Schließkeil ist. Eine vertikale Bewegung des Antriebs- und Schließkeils in Richtung des Schiebers bewirkt somit eine horizontale Bewegung des Schiebers.

Entscheidend ist, dass der Schieber im Bereich der Antriebsseite eine besondere Kontur der Führungsnut aufweist, in welche der Antriebssteg des Antriebs- und Schließkeils eingreift, wobei sowohl die Führungsnut des Schiebers, als auch der Antriebssteg des Antriebs- und Schließkeils Keilflächen aufweisen, welche beim Schließ- und Öffnungsvorgang der Formplatten zusammenwirken.

Bei einer bevorzugten Ausführungsform greift der Antriebs- und Schließkeil über den Außenumfang des Schiebers hindurch und in eine hierfür vorgesehene halboffene, profilierte Ausnehmung in der darunterliegenden Schieberführung ein. Der Antriebs- und Schließkeil ist bevorzugt in der düsenseitigen Formplatte angeordnet, während sich die Schieberführung bevorzugt in der auswerferseitigen Formplatte befindet. Aufgrund des Eingriffs des Antriebs- und Schließkeils in die Ausnehmung der Schieberführung bei geschlossenen Formplatten ergibt sich der Vorteil, dass nun der Antriebs- und Schließkeil die Kraft des Schiebers sowohl auf die düsenseitige, als auch auswerferseitige Formplatte überträgt.

Bei einer weiteren bevorzugten Ausführungsform ist der Antriebs- und Schließkeil in der düsenseitigen Formplatte angeordnet, welche einen Einbauraum mit einer definierten Einbauhöhe aufweist. Der Antriebs- und Schließkeil weist eine kraftaufnehmende, stegartige Fläche auf, welche in etwa der Einbauhöhe des Einbauraums entspricht, wobei über die kraftaufnehmende Fläche der Antriebs- und Schließkeil die Kraft an die düsenseitige Formplatte abgibt.

Vorteilhaft weist der Antriebs- und Schließkeil mindestens einen Antriebssteg mit definierten Flächen auf, welche mit den definierten Flächen der mindestens einen Führungsnut des Schiebers zusammenwirken. Der Schieber und der Antriebs- und Schließkeil weisen somit beide Konturen auf, welche als Kulissenführung ausgebildet sind.

Bevorzugt weist der Antriebs- und Schließkeil einen von der Seitenfläche abstehenden, geneigten Antriebssteg auf, welcher in die seitliche, halboffene und ebenfalls geneigte Führungsnut des Schiebers eingreift. Die korrespondierenden Flächen des Antriebsstegs und der Führungsnut wirken zusammen, so dass Kräfte ausgehend von dem Antriebs- und Schließkeil auf den Schieber übertragen werden.

Bei einer ersten bevorzugten Ausführungsform ist der Schieber L-förmig ausgebildet. Die L-förmige Form wird durch ein großes und ein kleines Rechteck gebildet. Das kleinere Rechteck bildet den Schieberkopf und weist eine kurze Seitenlänge auf. Das kleine Rechteck ist in einem 90°-Winkel gegenüber dem größeren Rechteck mit einer langen Seitenlänge angeordnet. Auf der Seitenfläche des kleineren Rechtecks befindet sich eine Führungsnut. Das kleinere Rechteck des L-förmigen Schiebers bildet somit die Antriebsseite, während das größere Rechteck des L-förmigen Schiebers die Formkonturseite bildet. die größere Breite des kleineren Rechtecks entsteht.

Die beiden Rechtecke weisen vorzugsweise unterschiedliche Breiten auf. Die Breite des kleineren Rechtecks (Schieberkopf), welches die Antriebsseite bildet, ist größer ausgebildet, als die Breite des größeren Rechtecks (Formkonturseite).

Der Schieber weist vorzugsweise einen Schieberkopf auf. Der Schieberkopf kann sämtliche geometrische Formen aufweisen und bildet eine Einheit mit dem Schieber aus. Es ist aber auch möglich, dass der Schieberkopf eine separate Einheit gegenüber dem Schieber ausbildet.

Die Erfindung beansprucht ferner auch einen Schutz für eine kinematische Umkehrung. Bei der vorliegenden Ausführungsform weist der Schieberkopf ebenfalls einen zusätzlichen Führungsabschnitt auf, jedoch befindet sich nun im Bereich des Führungsabschnitts mindestens ein Antriebssteg. Der Antriebs- und Schließkeil weist dann mindestens eine Führungsnut auf, welche bei einer Bewegung der Formplatten mit dem Antriebssteg zusammenwirkt.

Am Schieberkopf des Schiebers ist somit ein zusätzlicher Führungsabschnitt vorgesehen, wobei im Führungsabschnitt der Antriebssteg angeordnet ist. Zur Kühlung des Schiebers ist dann mindestens eine Kühlvorrichtung in einem Bereich außerhalb des Führungsabschnitts vorgesehen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematische Darstellung der Schiebereinheit bei geschlossenem Werkzeug
- Figur 2.: weitere schematische Darstellung der Schiebereinheit bei geschlossenem Werkzeug
- Figur 3:: schematische Darstellung der Schiebereinheit bei geöffnetem Werkzeug
- Figur 4:: weitere schematische Darstellung der Schiebereinheit bei geöffnetem Werkzeug
- Figur 5:: Schnittdarstellung durch die Schiebereinheit mit Kühlvorrichtung
- Figur 6:: perspektivische Darstellung der Schiebereinheit bei geschlossenem Werkzeug
- Figur 7:: geschnittene Darstellung der Schiebereinheit gemäß Figur 6
- Figur 8:: perspektivische Darstellung der Schiebereinheit bei geöffnetem Werkzeug
- Figur 9:: geschnittene Darstellung der Schiebereinheit gemäß Figur 8
- Figur 10:: perspektivische Darstellung der Schiebereinheit bei geschlossenem Werkzeug mit einer nach hinten versetzten Anordnung der Schiebereinheit
- Figur 11:: geschnittene Darstellung der Schiebereinheit gemäß Figur 10
- Figur 12:: perspektivische Darstellung der Schiebereinheit bei geöffnetem Werkzeug mit einer nach hinten versetzten Anordnung der Schiebereinheit
- Figur 13:: geschnittene Darstellung der Schiebereinheit gemäß Figur 12
- Figur 14:: schematische Darstellung der Schiebereinheit bei geöffnetem Werkzeug
- Figur 15:: schematische Darstellung der Schiebereinheit bei geschlossenem Werkzeug
- Figur 16:: perspektivische Darstellung des Antriebs- und Schließkeils auf der Düsenseite
- Figur 17:: perspektivische Darstellung der Schieberführung auf der Auswerferseite
- Figur 18:: Darstellung des Schiebers mit Kühlvorrichtung, wobei die eigentlich nicht-sichtbaren Kanten sichtbar sind
- Figur 19:: Seitenansicht des Schiebers
- Figur 20:: perspektivische Darstellung des Schiebers
- Figur 21:: Draufsicht auf den Schieber
- Figur 22:: perspektivische Darstellung des Antriebs- und Schließkeils
- Figur 23:: weitere perspektivische Darstellung des Antriebs- und Schließkeils
- Figur 24:: schematische Darstellung einer weiteren Ausführungsform der Schiebereinheit im geschlossenen Zustand
- Figur 25:: schematische Darstellung einer weiteren Ausführungsform der Schiebereinheit im geöffneten Zustand
- Figur 26:: perspektivische Darstellung des Antriebs- und Schließkeils gemäß der weiteren Ausführungsform
- Figur 27:: perspektivische Darstellung des Schiebers gemäß der weiteren Ausführungsform

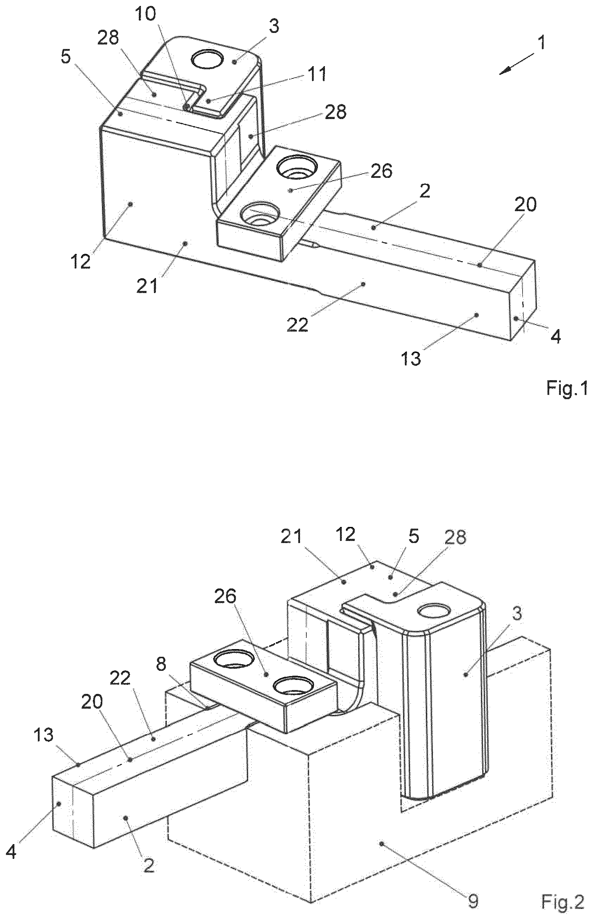

Mit der Figur 1 wird der Schieber 2 und der Antriebs- und Schließkeil 3 der Schiebereinheit 1 gezeigt. Der Schieber 2 ist gegenüber einer noch nicht dargestellten Schieberführung 9 verschiebbar angeordnet und wird mit einer lösbaren Halteplatte 26 in der Schieberführung 9 gehalten. Die Schieberführung befindet ist vorzugsweise in der Formplatte eingearbeitet.

Ein Antriebs- und Schließkeil 3 ist in einer ersten nicht dargestellten Formplatte angeordnet. Die Schieberführung 9 ist in einer gegenüberliegenden, zweiten Formplatte angeordnet. Bei einer Bewegung der Formplatten greift der Antriebs- und Schließkeil 3 mit seinem Antriebssteg 11 in die Führungsnut 10 des Schiebers 2 ein und ist im geschlossenen Zustand der Formplatten mit dem Schieber 2 im Eingriff.

Der Schieber 2 weist eine L-Form auf und besteht aus einem langgestreckten, großen Rechteck 13 und einem kurzen, kleinen Rechteck 12. Das kleinere Rechteck 12 bildet einen Schieberkopf 5. Der Schieber 2 teilt sich in eine Antriebsseite 21 und eine Formkonturseite 22 auf.

Die Längsachse 20 (Symmetrieachse) teilt den Körper des Schiebers 2 symmetrisch. Im Bereich des Schieberkopfes 5 befindet sich auf einer Seite der Längsachse 20 ein zusätzlicher, seitlicher Führungsabschnitt 28. Durch den zusätzlichen Führungsabschnitt 28 weist der Schieberkopf 5 eine Asymmetrie auf. Der Führungsabschnitt 28 erstreckt sich vorzugsweise über den gesamten Schieberkopf 5 und weist eine Führungsnut 10 für einen Antriebssteg 11 auf.

Die Figur 1 zeigt schematisch den Schieber 2, wenn das Werkzeug geschlossen ist. Dies bedeutet, dass sich der Antriebssteg 11 des Antriebs- und Schließkeils 3 vollkommen im Eingriff in der Führungsnut 10 befindet.

Figur 2 zeigt die Schiebereinheit 1 mit dem Schieber 2 und dem Antriebs- und Schließkeil 3 im geschlossenen Zustand des Werkzeugs. Der Schieber 2 wird mittels der lösbaren Halteplatte 26 in der Schieberführung 9 gehalten.

Mit der Figur 3 wird schematisch der Schieber 2 und der Antriebs- und Schließkeil 3 im geöffneten Zustand des Werkzeugs gezeigt. Die Führungsnut 10 des Schiebers 2 befindet sich in einem eigens hierfür vorgesehenen, zusätzlichen Führungsabschnitt 28 am Schieberkopf 5.

An der Stirnseite des Schieberkopfes 5 befinden sich jeweils ein Eingang 16 und ein Ausgang 17 für einen Kühlmittelkreislauf einer Kühlvorrichtung 18. Die Ein- und Ausgänge 16, 17 sind vorzugsweise als Steckkupplung ausgebildet. Auf der gegenüberliegenden Stirnseite des Schiebers 2 ist die Formkontur 4, welche im direkten Kontakt mit dem Formteil ist.

Der Antriebs- und Schließkeil 3 weist einen abstehenden, geneigten Antriebssteg 11 auf, welcher in die geneigte Führungsnut 10 des Schiebers 2 eingreift. Die Führungsnut 10 des Schiebers 2 weist mindestens eine Führungskontur auf, welche als geneigte Fläche ausgebildet ist und eine Kulissenführung für den Antriebs- und Schließkeil 3 ist.

Bei einer vertikalen Verschiebung des Antriebs- und Schließkeils 3 nach unten wird eine Kraft ausgehend von dem Antriebssteg 11 des Antriebs- und Schließkeils 3 über die Führungsnut 10 auf den Schieberkopf 5 bzw. den Schieber 2 übertragen, wodurch der Schieber 2 in horizontaler Richtung in der Schieberführung 9 bewegt wird. Vorzugsweise gleitet die Seitenfläche 23 des Antriebs- und Schließkeils 3 an der Seitenfläche 24 des Schieberkopfes 5 entlang und bildet eine Führung für die beiden Bauteile.

Figur 4 zeigt eine weitere Ansicht des Schiebers 2 und des Antriebs- und Schließkeils 3 im geöffneten Zustand des Werkzeugs. Die Führungsnut 10 erstreckt sich vorzugsweise über die gesamte Höhe des Schiebers 2. Die Schieberführung 9 weist eine halboffene, profilierte Ausnehmung 27 auf, in welche der Antriebs- und Schließkeils 3 beim Schließen des Werkzeugs eingreift.

Der Antriebs- und Schließkeils 3 mit dem antriebs- und schließseitige Antriebssteg 11 greift somit in die Führungsnut 10 ein und über den Außenumfang des Schiebers 2 hinaus formschlüssig in eine halboffene, profilierte Ausnehmung 27 der Schieberführung 9 ein. Durch das formschlüssige Eingreifen des Antriebs- und Schließkeils 3 in die profilierte Ausnehmung 27 findet eine Verriegelung des Schiebers 2 innerhalb der Schieberführung 9 statt. Der Schieber 2 kann in diesem Zustand nicht mehr hin- und herbewegt werden.

Auf der Antriebsseite 21 des Schiebers 2 befindet sich der Schieberkopf 5 mit den Ein- und Ausgängen 16, 17 für die Kühlvorrichtung 18. Der Führungsabschnitt 28 mit der Führungsnut 11 ist asymmetrisch am Schieberkopf 5 angeordnet.

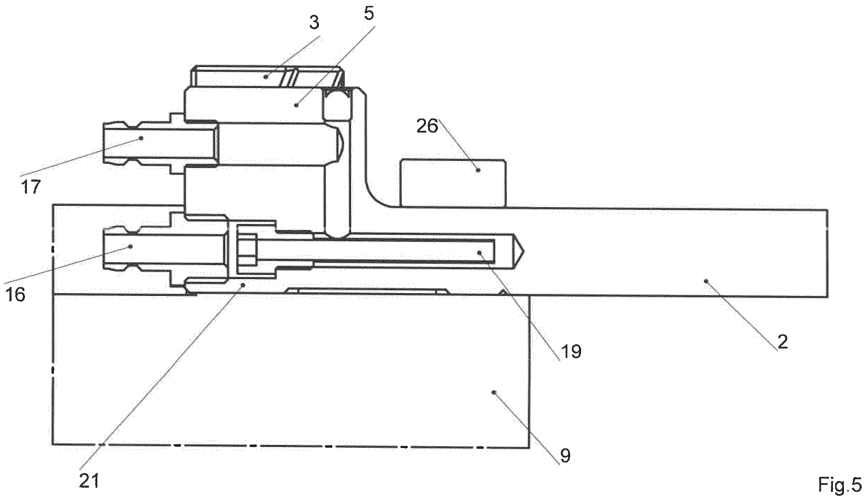

Mit der Figur 5 wird ein Schnitt durch die Schiebereinheit 1 mit der Kühlvorrichtung 18 gezeigt. Die Kühlvorrichtung 18 besteht im Wesentlichen aus einem Eingang 16, durch welche Kühlflüssigkeit in die Kühlkanäle 19 in den Schieber 2 eingeleitet wird. Vorzugsweise erstreckt sich der Kühlkanal 19 ausgehend von der Antriebseite 21 bis zur Formkonturseite 22. Die Kühlflüssigkeit nimmt die Wärme auf und wird durch den Ausgang 17 aus dem Schieber 2 wieder ausgeleitet.

Die Kühlvorrichtung 18 erstreckt sich mit den Kühlkanälen 19 somit über nahezu den gesamten Schieber 2. Dies ist nur möglich, da die Führungsnut 11 in einem zusätzlichen Führungsabschnitt 28 angeordnet ist. Der Führungsabschnitt 28 befindet sich an einer Seitenfläche des Schieberkopfes 5. Durch den zusätzlichen Führungsabschnitt 28 weist der Schieberkopf 5 eine Asymmetrie gegenüber der Längsachse 20 des Schiebers 2 auf.

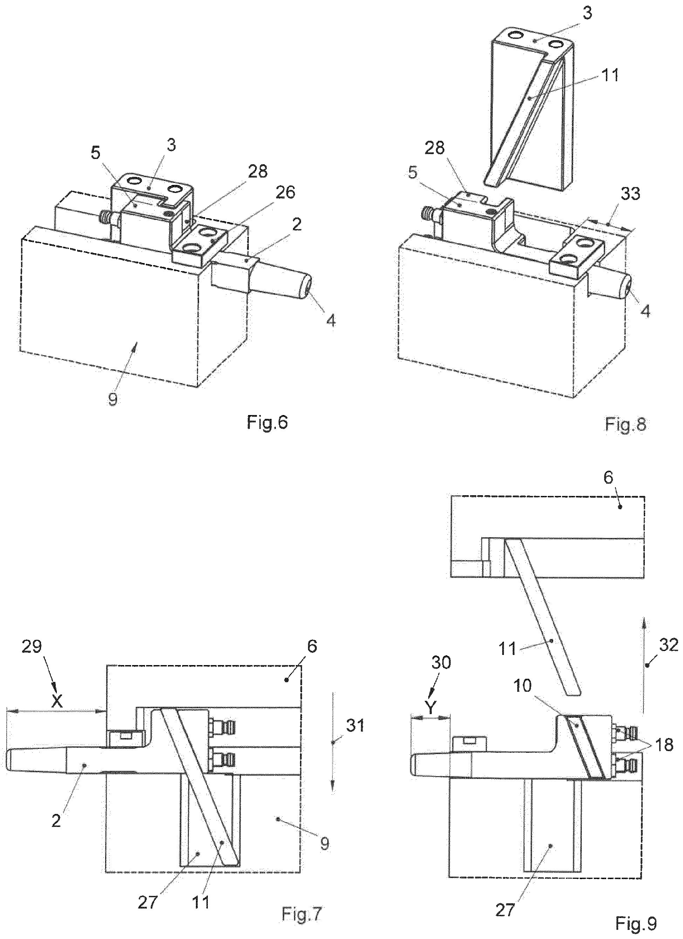

Die Figuren 6 und 7 zeigen die Schiebereinheit 1 bei geschlossenem Werkzeug, wobei der Schieber 2 mit der lösbaren Halteplatte 26 in der vordersten Stellung innerhalb der Schiebereinheit 1 angeordnet ist. Der Antriebs- und Schließkeil 3 wurde in Pfeilrichtung 31 nach unten bewegt. Der Schieber 2 ist mit einer Länge 29 aus der Schieberführung 9 ausgefahren und macht einen Hub von circa 40mm.

Gemäß der Figur 7 greift der Antriebs- und Schließkeils 3 formschlüssig in die Ausnehmung 27 der Schieberführung 9 ein und verriegelt den Schieber 2 gegenüber der Schieberführung 9.

Die Figuren 8 und 9 zeigen die Schiebereinheit 1 bei geöffnetem Werkzeug, wobei der Schieber 2 mit der lösbaren Halteplatte 26 in der vordersten Stellung innerhalb der Schiebereinheit 1 angeordnet ist. Der Antriebs- und Schließkeil 3 wurde in Pfeilrichtung 32 nach oben bewegt. Der Schieber 2 ist vollkommen innerhalb der Schieberführung 9 zurückgezogen, so dass nur noch die Kontur 4 des Schiebers 2 mit einer Länge 30 über den Umfang der Schieberführung 9 übersteht.

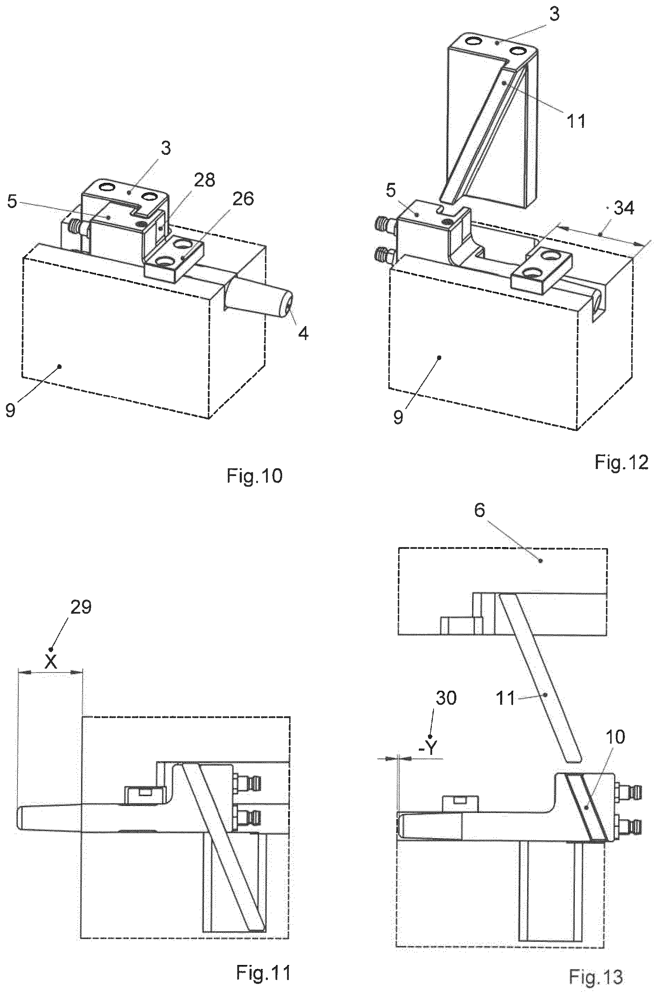

Die Figuren 10 und 11 zeigen die Schiebereinheit 1 bei geschlossenem Werkzeug, wobei der Schieber 2 mit der lösbaren Halteplatte 26 in der hintersten Stellung innerhalb der Schiebereinheit 1 angeordnet ist. Der Schieber 2 ist mit einer Länge 29 aus der Schieberführung 9 ausgefahren und macht einen Hub von circa 40mm.

Die Figuren 12 und 13 zeigen die Schiebereinheit 1 bei geöffnetem Werkzeug, wobei der Schieber 2 mit der lösbaren Halteplatte 26 in der hintersten Stellung innerhalb der Schiebereinheit 1 angeordnet ist. Der Schieber 2 ist vollkommen innerhalb der Schieberführung 9 zurückgezogen, so dass sich der Schieber 2 vollkommen in der Schieberführung 9 befindet und nicht über den Umfang der Schieberführung 9 übersteht.

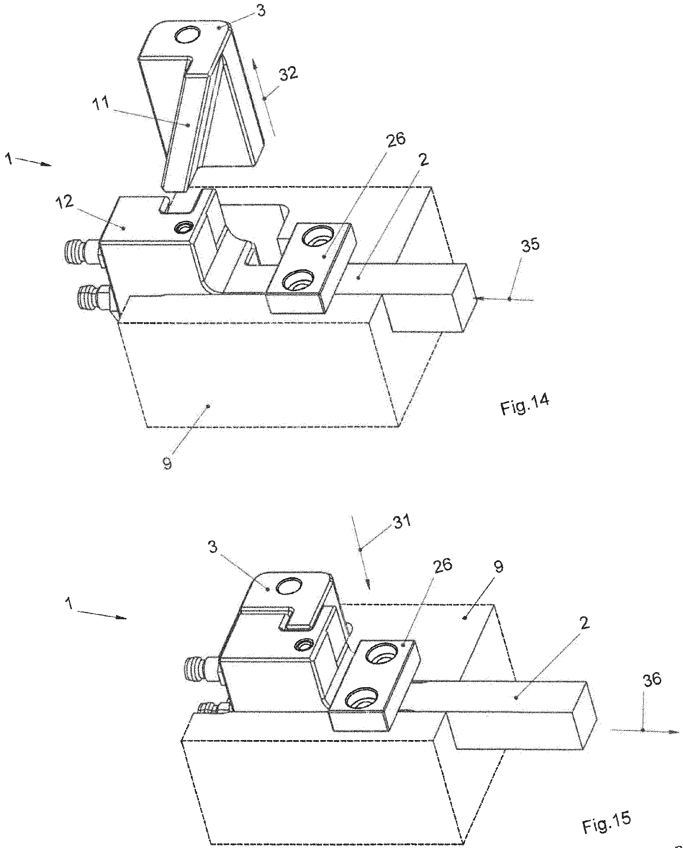

Die Figuren 14 und 15 zeigen noch einmal die Bewegungsabläufe der Schiebereinheit 1.

Bei der Figur 14 bewegt sich der Antriebs- und Schließkeil 3 in Pfeilrichtung 32 nach oben, wodurch gleichzeitig der Schieber 2 horizontal in Pfeilrichtung 35 bewegt wird. Dies wird durch die Kulissenführung erreicht, welche durch den Antriebssteg 11 und die Führungsnut 10 gebildet wird. Bei der Figur 15 bewegt sich der Antriebs- und Schließkeil 3 in Pfeilrichtung 31 nach unten, wodurch gleichzeitig der Schieber 2 horizontal in Pfeilrichtung 36 bewegt und verriegelt wird.

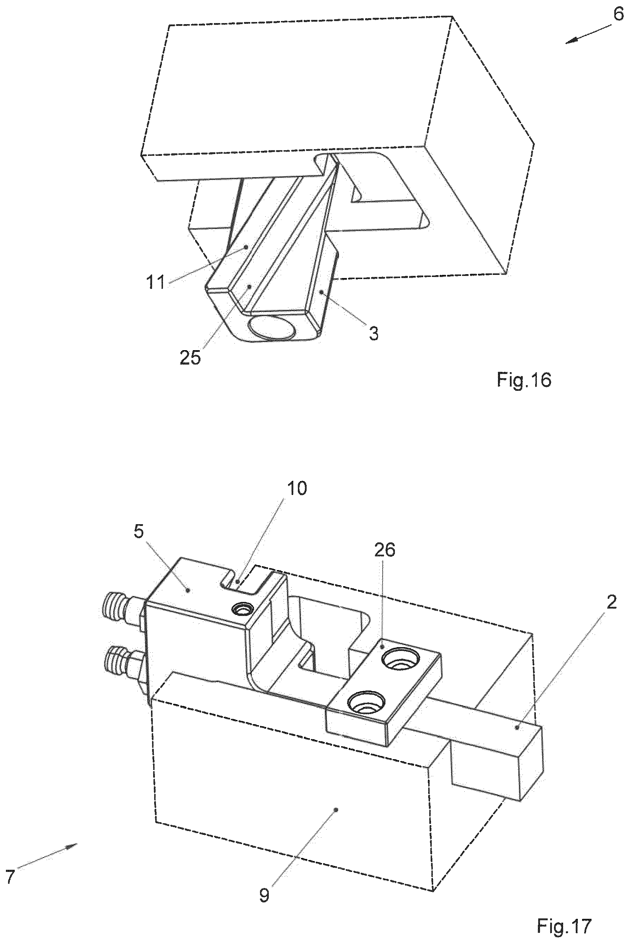

Die Figuren 16 und 17 zeigen die Schiebereinheit 1 in einer Einbausituation im Werkzeug. Figur 16 zeigt die Düsenseite 6 der Formplatte und Figur 17 die Auswerferseite 7 der Formplatte.

Der Antriebs- und Schließkeil 3 hat den geneigten Antriebssteg 11, welcher bevorzugt Keilflächen, Stützflächen, sowie Rückzugsflächen aufweist. Die definierten Flächen des Antriebs- und Schließkeils wirken auf die Flächen des Schiebers 2, welche sich bevorzugt im Bereich der Führungsnut 10 des Schiebers 2 befinden. Der Schieber und der Antriebs- und Schließkeil weisen somit beide Konturen auf, welche als Kulissenführung ausgebildet sind.

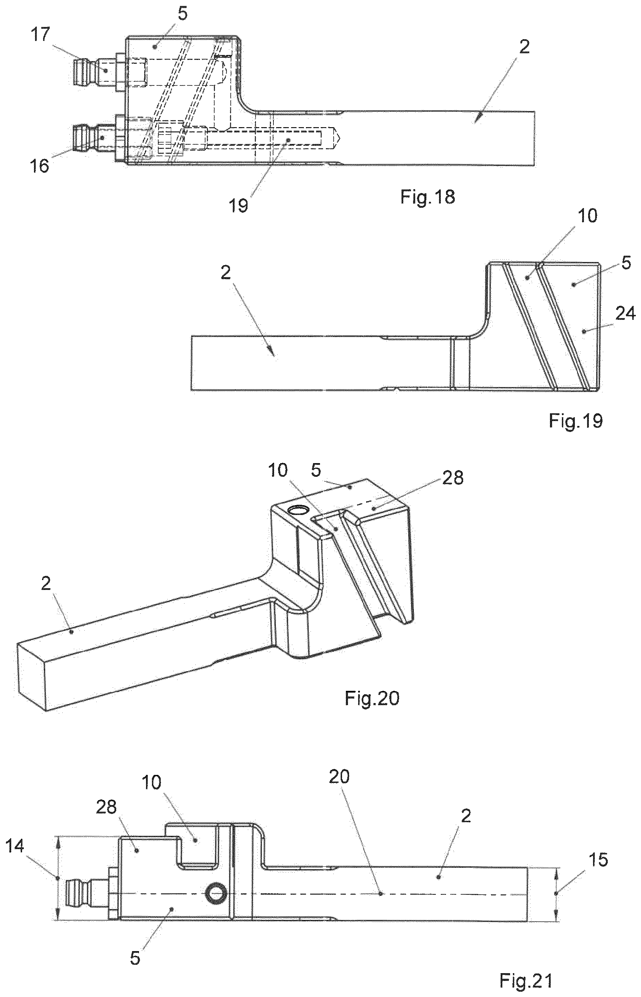

Die Figuren 18, 19, 20 und 21 zeigen den Schieber 2 in verschiedenen Darstellungen bzw. Ansichten. Mit der Figur 18 wird noch einmal der Verlauf der Kühlkanäle innerhalb des Schiebers 2 gezeigt.

Figur 19 ist eine Seitenansicht des Schiebers 2 anhand welcher man die halboffene Führungsnut 10 auf der Seitenfläche 24 des Schiebers 2 bzw. Schieberkopfes 5 erkennen kann.

Figur 20 zeigt eine perspektivische Darstellung des Schiebers 2 mit dem Schieberkopf 5 und dem zusätzlichen Führungsabschnitt 28. Der Führungsabschnitt 28 weist die Führungsnut 10 auf, in welche der Antriebssteg 11 des Antriebs- und Schließkeils 3 eingreift.

Mit der Figur 21 wird eine Draufsicht auf den Schieber 2 der Schiebereinheit 1 gezeigt. Der Schieber 2 weist eine Längsachse 20 auf, welche der Richtung seiner größten Ausdehnung entspricht. Im Bereich des Schieberkopfes 5 befindet sich ein Führungsabschnitt 28, welcher den Schieberkopf 5 einseitig um einen zusätzlichen Bereich erweitert. Durch die zusätzliche Erweiterung ist der Schieberkopf 5 asymmetrisch ausgebildet. Die Breite 14 des Schieberkopfes 5 ist größer als die Breite 15 des restlichen Schiebers 2.

Der Führungsabschnitt 28 ist ein zusätzlicher Abschnitt für die Führungsnut 10. Durch den Führungsabschnitt 28 kann die Führungsnut 10 außerhalb des eigentlichen Schieberkopfes 5 angeordnet werden, so dass der Schieberkopf 5 die Kühlvorrichtung 18 aufnehmen kann.

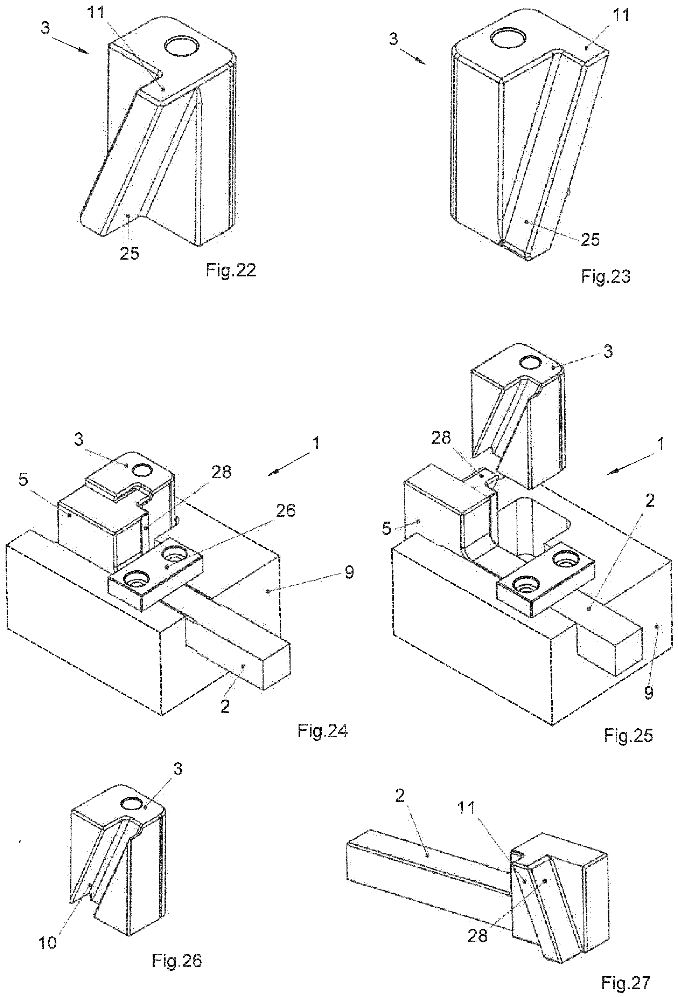

Die Figuren 22 und 23 zeigen verschiedene Ansichten von dem Antriebs- und Schließkeil 3. Der Antriebs- und Schließkeil 2 weist einen geneigten Antriebssteg 11 mit Keilflächen 25 auf, welche mit bestimmten Flächen der Führungsnut 10 zusammenwirken.

Mit den Figuren 24, 25, 26 und 27 wird eine weitere erfindungsgemäße Ausführungsform der Schiebereinheit 1 gezeigt. Bei der vorliegenden Ausführungsform weist der Schieberkopf 5 ebenfalls einen zusätzlichen Führungsabschnitt 5 auf, jedoch befindet sich nun im Bereich des Führungsabschnitts 5 der Antriebssteg 11. Der Antriebs- und Schließkeil 3 weist dann die Führungsnut 10 auf, welche bei einer Bewegung der Formplatten mit dem Antriebssteg 11 zusammenwirkt.

### Zeichnungslegende

- 1.: Schiebereinheit
- 2.: Schieber
- 3.: Antriebs- und Schließkeil
- 4.: Formkontur
- 5.: Schieberkopf
- 6.: Düsenseite
- 7.: Auswerferseite
- 8.: Einbauraum
- 9.: Schieberführung
- 10.: Führungsnut
- 11.: Antriebssteg
- 12.: Rechteck (klein)
- 13.: Rechteck (groß)
- 14.: Breite von 5
- 15.: Breite von 2
- 16.: Eingang
- 17.: Ausgang
- 18.: Kühlvorrichtung
- 19.: Kühlkanäle
- 20.: Längsachse
- 21.: Antriebsseite
- 22.: Formkonturseite
- 23.: Seitenfläche von 3
- 24.: Seitenfläche von 28
- 25.: Keilfläche
- 26.: Halteplatte
- 27.: Ausnehmung für 3
- 28.: Führungsabschnitt
- 29.: Länge von Hub (geschlossen)
- 30.: Länge von Hub (geöffnet)
- 31.: Pfeilrichtung (geschlossen)
- 32.: Pfeilrichtung (geöffnet)
- 33.: Abstand
- 34.: Abstand
- 35.: Schieberbewegung (geöffnet)
- 36.: Schieberbewegung (geschlossen)

## Patentansprüche

1. Schiebereinheit (1) für Spritz- und Druckgussformen mit einem Schieber (2), welcher gegenüber einer Schieberführung (9) verschiebbar angeordnet ist, wobei ein Antriebs- und Schließkeil (3) in einer ersten Formplatte angeordnet ist und die Schieberführung (9) in einer gegenüberliegenden, zweiten Formplatte angeordnet ist, wobei bei einer Bewegung der Formplatten der Antriebs- und Schließkeil (3) mit mindestens einem Antriebssteg (11) in mindestens eine Führungsnut (10) des Schiebers (2) eingreift und mit der Führungsnut (10) zusammenwirkt, **dadurch gekennzeichnet, dass** am Schieber (2) ein Schieberkopf (5) mit einem zusätzlichen Führungsabschnitt (28) angeordnet ist, und dass im Führungsabschnitt (28) die Führungsnut (10) angeordnet ist, wobei zur Kühlung des Schiebers (2) im Schieber (2) mindestens eine Kühlvorrichtung (18) in einem Bereich außerhalb des Führungsabschnitts (28) vorgesehen ist.

2. Schiebereinheit (1) nach Anspruch 1, **dadurch gekennzeichnet, dass** der Führungsabschnitt (28) einstückig oder lösbar am Schieberkopf (5) angeordnet ist.

3. Schiebereinheit (1) nach einem der Ansprüche 1 oder 2, **dadurch gekennzeichnet, dass** der Führungsabschnitt (28) ein zusätzlichen Materialbereich ist, welcher den Schieberkopf (5) zumindest einseitig erweitert.

4. Schiebereinheit nach einem der Ansprüche 1 bis 3, **dadurch gekennzeichnet, dass** der Führungsabschnitt (28) seitlich und/oder asymmetrisch am Schieberkopf (5) des Schiebers (2) angeordnet ist.

5. Schiebereinheit nach einem der Ansprüche 1 bis 4, **dadurch gekennzeichnet, dass** die Führungsnut (10) sich über die gesamte Höhe des Schiebers (2) erstreckt und dass der Führungssteg (11) in die mindestens eine Führungsnut (10) eingreift und über den Außenumfang des Schiebers (2) hinaus mit dem Antriebs- und Schließkeil (3) formschlüssig in eine halboffene, profilierte Ausnehmung (27) der Schieberführung (9) eingreift.

6. Schiebereinheit nach einem der Ansprüche 1 bis 5, **dadurch gekennzeichnet, dass** die Führungsnut (10) mindestens eine Führungskontur aufweist und eine Kulissenführung für den Antriebssteg (11) des Antriebs- und Schließkeils (3) ist.

7. Schiebereinheit (1) für Spritz- und Druckgussformen mit einem Schieber (2), welcher gegenüber einer Schieberführung (9) verschiebbar angeordnet ist, wobei ein Antriebs- und Schließkeil (3) in einer ersten Formplatte angeordnet ist und die Schieberführung (9) in einer gegenüberliegenden, zweiten Formplatte angeordnet ist, wobei bei einer Bewegung der Formplatten der Schieber (2) mit mindestens einem Antriebssteg (11) in mindestens eine Führungsnut (10) des Antriebs- und Schließkeils (3) eingreift und mit der Führungsnut (10) zusammenwirkt, **dadurch gekennzeichnet, dass** am Schieber (2) ein Schieberkopf (5) mit einem zusätzlichen Führungsabschnitt (28) angeordnet ist und dass im Führungsabschnitt (28) der Antriebssteg (11) angeordnet ist, wobei zur Kühlung des Schiebers (2) im Schieber (2) mindestens eine Kühlvorrichtung (18) in einem Bereich außerhalb des Führungsabschnitts (28) vorgesehen ist.

8. Schiebereinheit nach Anspruch 7, **dadurch gekennzeichnet, dass** die Führungsnut (10) mindestens eine Führungskontur aufweist und eine Kulissenführung für den Antriebssteg (11) des Schiebers (2) ist.

9. Schiebereinheit nach den Ansprüchen 1 und 7, **dadurch gekennzeichnet, dass** die Kühlvorrichtung (18) als Kühlkreislauf ausgebildet ist und mindestens einen Eingang (16), mindestens einen Kühlkanal (19) und mindestens einen Ausgang (17) für das Kühlmedium aufweist.

10. Schiebereinheit nach einem der Ansprüche 1 bis 9, **dadurch gekennzeichnet, dass** die Schiebereinheit (1) als Kompaktschiebereinheit ausgebildet ist, wobei der Antriebs- und Schließkeil (3) gleichzeitig den Schieber (2) betätigt und verriegelt.

## Claims

1. A slider unit (1) for injection and die casting moulds with a slider (2) that is arranged so that it can be slid relative to a slider guide (9), wherein a drive and closing wedge (3) is arranged in a first mould plate and the slider guide (9) is arranged in an opposite second mould plate, wherein during movement of the mould plates, the drive and closing wedge (3) engages with at least one drive web (11) in at least one guide groove (10) of the slider (2) and interacts with the guide groove (10), **characterised in that** a slider head (5) with an additional guide section (28) is arranged on the slider (2), and **in that** the guide groove (10) is arranged in the guide section (28), wherein for cooling the slider (2), at least one cooling device (18) is provided in the slider (2) in an area outside of the guide section (28).

2. The slider unit (1) according to claim 1, **characterised in that** the guide section (28) is integrally or detachably arranged on the slider head (5).

3. The slider unit (1) as claimed in claim 1 or 2, **characterised in that** the guide section (28) is an additional material area that extends the slider head (5) on at least one side.

4. The slider unit as claimed in any one of claims 1 to 3, **characterised in that** the guide section (28) is laterally and/or asymmetrically arranged on the slider head (5) of the slider (2).

5. The slider unit as claimed in any one of claims 1 to 4, **characterised in that** the guide groove (10) extends over the entire height of the slider (2) and **in that** the guide web (11) engages in the at least one guide groove (10) and engages positively with the drive and closing wedge (3) beyond the outer circumference of the slider (2) into a semi-open, profiled recess (27) of the slider guide (9).

6. The slider unit as claimed in any one of claims 1 to 5, **characterised in that** the guide groove (10) has at least one guide contour and is a slotted guide for the drive bar (11) of the drive and closing wedge (3).

7. The slider unit (1) for injection and die-casting moulds with a slider (2) that is arranged so as to be slid relative to a slider guide (9), wherein a drive and closing wedge (3) is arranged in a first mould plate and the slider guide (9) is arranged in an opposite second mould plate, wherein during movement of the mould plates, the slider (2) engages with at least one drive bar (11) in at least one guide groove (10) of the drive and closing wedge (3) and interacts with the guide groove (10), **characterised in that** a slider head (5) with an additional guide section (28) is arranged on the slider (2), and **in that** the drive bar (11) is arranged in the guide section (28), wherein at least one cooling device (18) for cooling the slider (2) is provided in the slider (2) in an area outside the guide section (28).

8. The slider unit as claimed in claim 7, **characterised in that** the guide groove (10) has at least one guide contour and is a slotted guide for the drive bar (11) of the slider (2).

9. The slider unit as claimed in claims 1 and 7, **characterised in that** the cooling device (18) is designed as a cooling circuit and has at least one inlet (16), at least one cooling channel (19), and at least one outlet (17) for the cooling medium.

10. The slider unit as claimed in any one of claims 1 to 9, **characterised in that** the slider unit (1) is designed as a compact slider unit, wherein the drive and locking wedge (3) simultaneously actuates and locks the slider (2).

## Revendications

1. Unité de tiroir (1) pour des moules de moulage par injection et sous pression comprenant un tiroir (2), lequel est disposé de manière coulissante par rapport à un guidage de tiroir (9), dans laquelle une cale d'entraînement et de fermeture (3) est disposée dans une première plaque de moule et le guidage de tiroir (9) est disposé dans une seconde plaque de moule opposée, dans laquelle lors d'un mouvement des plaques de moule, la cale d'entraînement et de fermeture (3) s'insère avec au moins une nervure d'entraînement (11) dans au moins une rainure de guidage (10) du tiroir (2) et interagit avec la rainure de guidage (10), **caractérisée en ce qu'**une tête de tiroir (5) comprenant une section de guidage (28) supplémentaire est disposée sur le tiroir (2), et que la rainure de guidage (10) est disposée dans la section de guidage (28), dans laquelle au moins un dispositif de refroidissement (18) est prévu dans le tiroir (2), dans une zone en dehors de la section de guidage (28) pour refroidir le tiroir (2).

2. Unité de tiroir (1) selon la revendication 1, **caractérisée en ce que** la section de guidage (28) est disposée en une seule pièce ou de manière détachable sur la tête de tiroir (5).

3. Unité de tiroir (1) selon l'une des revendications 1 ou 2, **caractérisée en ce que** la section de guidage (28) est une zone de matériau supplémentaire, laquelle étend la tête de tiroir (5) au moins d'un côté.

4. Unité de tiroir selon l'une des revendications 1 à 3, **caractérisée en ce que** la section de guidage (28) est disposée latéralement et/ou asymétriquement sur la tête de tiroir (5) du tiroir (2).

5. Unité de tiroir selon l'une des revendications 1 à 4, **caractérisée en ce que** la rainure de guidage (10) s'étend sur toute la hauteur du tiroir (2) et que la nervure de guidage (11) s'insère dans l'au moins une rainure de guidage (10) et s'insère par coopération de formes avec la cale d'entraînement et de fermeture (3) au-delà du pourtour extérieur du tiroir (2) dans un évidement profilé semi-ouvert (27) du guidage de tiroir (9).

6. Unité de tiroir selon l'une des revendications 1 à 5, **caractérisée en ce que** la rainure de guidage (10) présente au moins un contour de guidage et est un guidage à coulisse pour la nervure d'entraînement (11) de la cale d'entraînement et de fermeture (3).

7. Unité de tiroir (1) pour moules de moulage par injection et sous pression comprenant un tiroir (2), lequel est disposé de manière coulissante par rapport à un guidage de tiroir (9), dans laquelle une cale d'entraînement et de fermeture (3) est disposée dans une première plaque de moule et le guidage de tiroir (9) est disposé dans une seconde plaque de moule opposée, dans laquelle lors d'un mouvement des plaques de moule le tiroir (2) s'insère avec au moins une nervure d'entraînement (11) dans au moins une rainure de guidage (10) de la cale d'entraînement et de fermeture (3) et interagit avec la rainure de guidage (10), **caractérisée en ce qu'**une tête de tiroir (5) comprenant une section de guidage (28) supplémentaire est disposée sur le tiroir (2), et que la nervure d'entraînement (11) est disposée dans la section de guidage (28), dans laquelle au moins un dispositif de refroidissement (18) est prévu dans le tiroir (2), dans une zone en dehors de la section de guidage (28) pour refroidir le tiroir (2).

8. Unité de tiroir selon la revendication 7, **caractérisée en ce que** la rainure de guidage (10) présente au moins un contour de guidage et est un guidage à coulisse pour la nervure d'entraînement (11) du tiroir (2).

9. Unité de tiroir selon les revendications 1 et 7, **caractérisée en ce que** le dispositif de refroidissement (18) est réalisé en tant que circuit de refroidissement et présente au moins une entrée (16), au moins un canal de refroidissement (19) et au moins une sortie (17) pour le milieu de refroidissement.

10. Unité de tiroir selon l'une des revendications 1 à 9, **caractérisée en ce que** l'unité de tiroir (1) est réalisée en tant qu'unité de tiroir compacte, dans laquelle la cale d'entraînement et de fermeture (3) actionne et verrouille simultanément le tiroir (2).
